# EUROPEAN PATENT APPLICATION

(11) **EP 3 441 603 A1**
(43) Date of publication of application: **13.02.2019**
(21) Application number: 16898024.1
(22) Date of filing: 08.07.2016
(51) Int. Cl.: F02M 26/32, F02M 26/29, F28F 3/00

(54) **GAS TUBE FOR EGR COOLER**

(30) Priority: 06.04.2016 KR 20160042371
(71) Applicant: Korens Co., Ltd., Gyeongsangnam-do 50591 (KR)
(72) Inventor: CHO, Hyung Geun, Busan 48120 (KR)
(74) Representative: Viering, Jentschura & Partner mbB Patent- und Rechtsanwälte
(86) International application number: PCT/KR2016/007455
(87) International publication number: WO 2017/175920

(57) **Abstract**

A gas tube for an EGR cooler according to the present invention includes a pair of gas tube panels coupled in a laminated manner so as to provide an internal flow path, the gas tube panel including a horizontal portion extending horizontally along an exhaust gas flow direction, a vertical portion vertically erected from both ends in a width direction of the horizontal portion, and a joint portion extending stepwisely from a longitudinal end of the horizontal portion, wherein a curved line is provided at an end of the joint portion. The gas tube for an EGR cooler according to the present invention has an advantage that the joint portion is expanded in a direction deviating from the width direction when the gas tube is heated to a high temperature by an exhaust gas passing through the internal flow path, so that thermal stress applied to the joint portion is evenly distributed to the respective portions, thereby improving coupling strength and durability.

## Description

### Technical Field

The present invention relates to a gas tube for an EGR cooler and, more particularly, to a gas tube for an EGR cooler, wherein the gas tube is configured such that a curved line is provided at an end thereof in a length direction to decrease the heat strain rate thereof in a width direction.

### Background Art

In general, exhaust gas recirculation (EGR) (is a system that reduces the temperature of the combustion chamber and decreases NOx by recirculating a part of the exhaust gas to the intake system to increase the CO2 concentration in the intake air.

Meanwhile, specifically in the process of NOx generation, air which is composed of 79% nitrogen, 21% oxygen, and small amounts of other elements is used. At room temperature, nitrogen and oxygen do not react with each other, but at high temperature (about 1450°C or higher), nitrogen and oxygen react with each other to form nitrogen oxides (thermal NOx). In particular, a diesel engine performs combustion by a compression ignition method and the compression ratio thereof is gradually increased due to the development materials used for a cylinder, and the temperature of the combustion chamber is increasing. Increasing the temperature of the combustion chamber improves thermodynamic efficiency of the engine, but thermal NOx is produced due to the high temperature. NOx is a major harmful substance that destroys the global environment, causing acid rain, photochemical smog, respiratory disease, etc.

The principles of NOx reduction by the EGR are to reduce the maximum temperature of the combustion chamber by recycling inert gas (water vapor, carbon dioxide, etc.) as the first principle, and to prevent the NOx generation atmosphere by the lean burn as the second principle, and to lower the spark advance delay and the local maximum temperature and pressure of the combustion chamber due to the injection of cooling inert gas of high specific heat as the third principle. On the other hand, it is reported that the mechanism of NOx reduction by EGR in a diesel engine, unlike a gasoline engine, is a fundamental cause of reduction of oxygen concentration, whereby a decrease of flame temperature is caused. At present, no conclusion has been made to decide which is right, but it has recently been reported that the contributions of oxygen concentration and flame temperature to the NOx reduction are almost same.

As regulations on the exhaust gas of the diesel engine become more strict, the EGR having an EGR cooler using cooling water of engine for reducing NOx without decreasing fuel efficiency or increasing particle materials (PM) is efficiently used as a low-cost and high efficiency system capable of realizing reduction of NOx.

In this case, the EGR cooler is required to be made of a heat-resistant material because the exhaust gas temperature of about 700°C should be cooled to 150°C to 200°C, and to be compactly designed for installation in a car. Further, the EGR cooler is required to minimize a pressure drop to supply the proper amount of EGR, and to be made of an anticorrosive material due to condensation of exhaust gas during the heat exchange and the sulfur component of the fuel, wherein the condensate contains sulfuric acid causing corrosion. Further, the EGR cooler needs a predetermined mechanical strength to endure a mechanical load caused by effects of exhaust gas pulsation, and the measures for preventing fouling by the particle materials (PM) of the exhaust gas which sometimes block the passage are required.

A conventional EGR cooler will be described in detail with reference to the accompanying drawings.

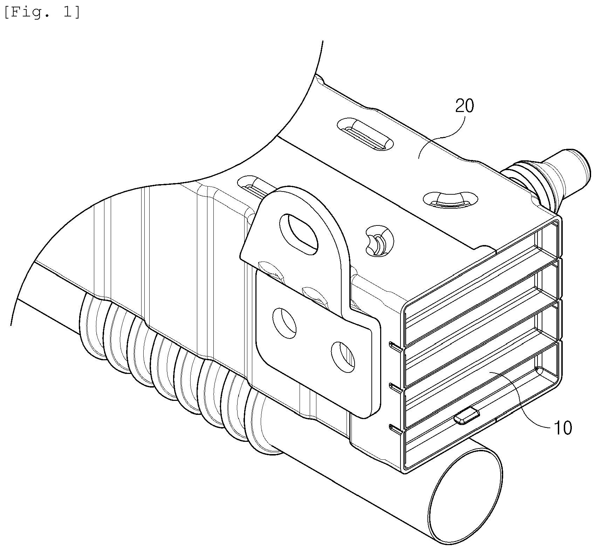

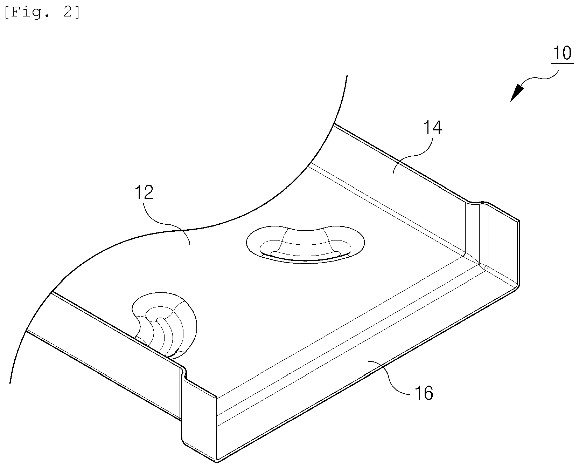

FIG. 1 is a perspective view of a conventional EGR cooler. FIG. 2 is a perspective view of a gas tube panel included in the conventional EGR cooler.

Generally, the EGR cooler includes a plurality of gas tubes through which exhaust gas flows, and a body cell 20 that is configured to allow cooling water to flow in and out, and the gas tubes are inserted therein as basic components. The gas tube is composed of a pair of gas tube panels 10 stacked vertically. The pair of gas tube panels 10 is formed as a channel shape that defines an exhaust gas flow passage therein.

As shown in FIG. 2, the gas tube panel 10 includes a horizontal portion 12 extending horizontally, a vertical portion 14 vertically erected from both ends in a width direction of the horizontal portion 12, and a joint portion 16 extending stepwisely from a longitudinal end of the horizontal portion 12.

One gas tube panel 10 of the pair of gas tube panels 10 is positioned such that the vertical portion 14 extends upwardly, and the other one 10 is joined upside-down such that the vertical portion 14 extends downwardly, as shown in FIG. 2.

The gas tube panel 10 is heated to a very high temperature by the exhaust gas flowing therein and expands. Here, the joint portion 16 is formed in a straight line at an end thereof, so the joint portion 16 expands in a direction parallel to the width direction of the gas tube panel 10 when heated. When the joint portion 16 expands in the direction parallel to the width direction of the gas tube panel 10 as described above, stresses are concentrated on the left and right sides (more clearly described, portions meeting the vertical portion 14) of the joint portion, which may cause damage to the gas tube panel 10 or detachment thereof from the body cell 20.

### Disclosure

### Technical Problem

The present invention has been proposed to solve the problems. Accordingly, an objective of the present invention to provide a gas tube for an EGR cooler, the gas tube including a pair of gas tube panels coupled together in a laminated manner so as to provide an internal flow path. When the gas tube is heated to a high temperature by a exhaust gas passing through the internal flow path, an expansion direction of a joint portion is set to be deviated from a width direction, so thermal stress applied to the joint portion can be evenly distributed to each portion of the joint portion, and the durability of the gas tube for the EGR cooler can be improved.

### Technical Solution

To achieve the above objective, the present invention provides a gas tube for an EGR cooler, the gas tube including: a pair of gas tube panels coupled in a laminated manner so as to provide an internal flow path, the gas tube panel including a horizontal portion extending horizontally along an exhaust gas flow direction, a vertical portion vertically erected from both ends in a width direction of the horizontal portion, and a joint portion extending stepwisely from a longitudinal end of the horizontal portion, wherein a curved line is provided at an end of the joint portion.

The curved line may be configured such that at least two arcs are arranged in a line.

The curved line may be configured in a shape of a sine wave.

The curved line may be provided at a point in the end of the joint portion, the point being spaced by a predetermined distance apart from the vertical portion.

In the gas tube, a distance between an end of the curved line and the vertical portion may be set to 2mm or more

The curved line may be spaced by a predetermined distance apart from the longitudinal end of the horizontal portion

The distance from the longitudinal end of horizontal portion to the curved line may be set to 6 times or more a thickness of the joint portion.

### Advantageous Effects

The gas tube for the EGR cooler according to the present invention is advantageous in that as the joint portion is expanded in a direction deviated from the width direction when heated to a high temperature by exhaust gas passing through the internal flow path, thermal stress applied to the joint portion can be evenly distributed to each part of the joint portion, thereby improving joint strength and durability.

### Description of Drawings

FIG. 1 is a perspective view of a conventional EGR cooler.
FIG. 2 is a perspective view of a gas tube panel included in the conventional EGR cooler.
FIG. 3 is a cutaway perspective view of a coupling structure of a gas tube for an EGR cooler according to the present invention.
FIGS. 4 and 5 are a partial perspective view and a partial plane view of the gas tube panel constituting the gas tube for the EGR cooler according to the present invention.
FIG. 6 shows a stress distribution pattern formed on the gas tube panel during thermal expansion.
FIG. 7 is a partial perspective view of a gas tube panel constituting a gas tube for an EGR cooler according to a second embodiment of the present invention.

### Mode for Invention

Hereafter, an embodiment of the gas tube for EGR cooler is described in detail with reference to the accompanying drawings.

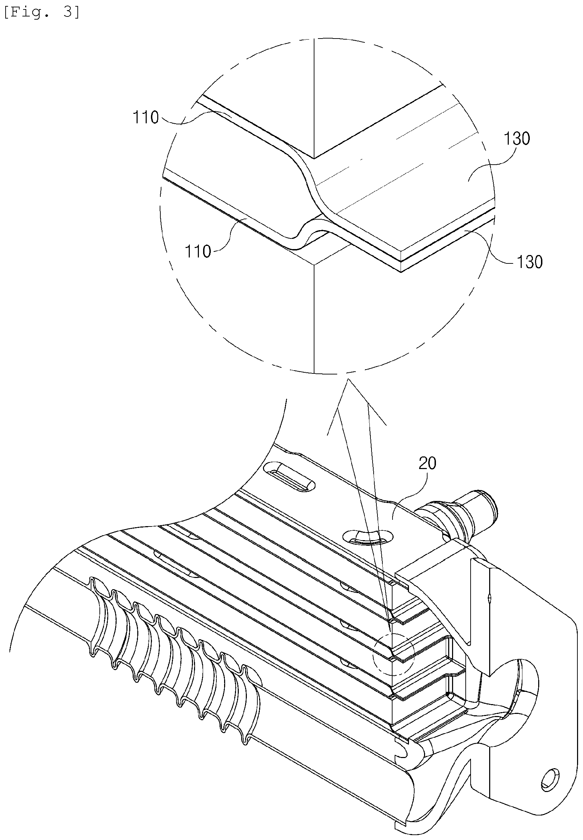

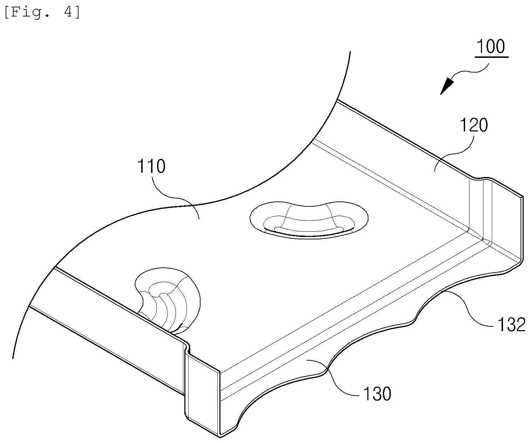

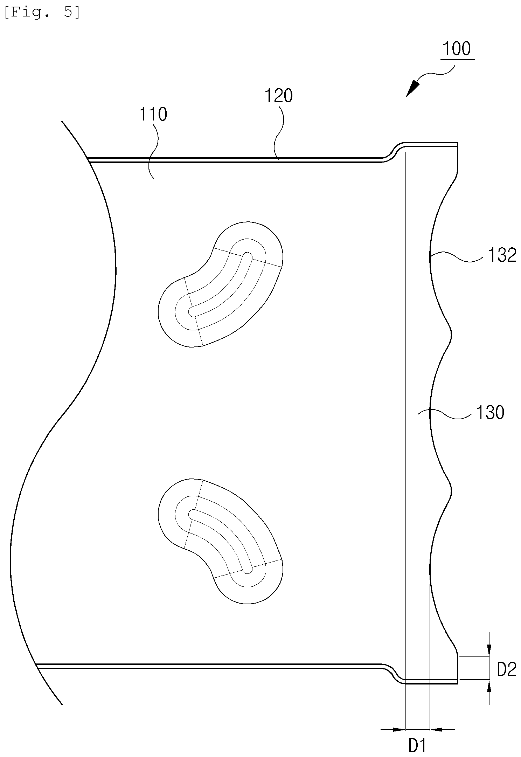

FIG. 3 is a cutaway perspective view of a coupling structure of a gas tube for an EGR cooler according to the present invention. FIGS. 4 and 5 are a partial perspective view and a partial plane view of the gas tube panel constituting the gas tube for the EGR cooler according to the present invention.

The gas tube for EGR cooler of the present invention is installed in a body cell through which cooling water flows. The gas tube is configured as a structure in which a pair of gas tube panels 100 coupled in a laminated manner is provided so as to form an internal flow path. The gas tube panel 100 includes a horizontal portion 110 horizontally extending along the flow direction of exhaust gas, and a vertical portion 120 vertically erected from both ends in the width direction of the horizontal portion 110. When the pair of the gas tube panels 100 are coupled in a laminated manner, the lower gas tube panel 100 is arranged so that the vertical portion 120 extends upward therefrom, and the upper gas tube panel 100 is arranged upside-down so that the vertical portion 120 extends downward therefrom, as shown in FIG. 4. The structure in which the pair of gas tube panels 100 is vertically coupled together to form one gas tube as described above is applied to a conventional EGR cooler as well, thus a detailed description for the structure will be omitted.

As described above, a plurality of gas tube panels 100 having an internal exhaust gas flow path is laminated in one body cell, in order to allow cooling water to flow between two neighboring gas tube panels 100. Furthermore, a joint portion 130 is provided at a longitudinal end of the horizontal portion 110 of the gas tube panel stepwisely in a direction opposite to an extending direction of the vertical portion 120. When the joint portion 130 is provided at the gas tube panels 100 as such, as shown in an enlarged view of FIG. 3, and when two gas tubes are laminated in the body cell, only the joint portions 130 are coupled mutually and the horizontal portions 110 are spaced apart from each other, so that cooling water can flow through between the two horizontal portions 110.

Meanwhile, since a high temperature exhaust gas flows inside the gas tube, the horizontal portion 110, the vertical portion 120, and the joint portion 130 constituting the gas tube are all thermally expanded. At this time, since the joint portions 130 of two neighboring gas tubes are joined together by a brazing manner, the joint portions 130 may be broken when the joint portions 130 are excessively thermally expanded, or a problem may arise in which the joint portions 130 mutually joined are separated from each other. Especially, when the end of the joint portion 130 is formed in a line, the joint portion 130 is thermally expanded only in a width direction, so the joint portion 130 may be greatly transformed in the width direction, and there may be a problem in that a damage to the joint portion 130 or a fault in the joint portion 130 may be more easily generated.

In order to solve such a problem, the gas tube according to the present invention has the best structural advantage in that a curved line 132 is provided at an end of the joint portion 130, as shown in FIGS. 4 and 5. When the curved line 132 is formed at the end of the joint portion 130 as described above, the end of the joint portion 130 expands along the curved line 132 arranged to be inclined relative to the width direction instead of expanding in a direction (the vertical direction in FIG. 5) parallel to the width direction when thermally expanding, so the width of the joint portion 130 is not greatly increased, and thus the stress formed on the joint portion 130 is reduced.

Therefore, as the two joint portions 130 coupled to contact with each other are not separated from each other nor are the joint portions 130 damaged, the gas tube according to the present invention has the advantage of increased durability.

At this time, when the curved line 132 formed at the end of the joint portion 130 is produced with a curvature over a reference value, in other words, when the curved line 132 is formed in a shape having a large slope, stress may be concentrated on a inflection point portion of the curved line 132 and the portion may be damaged. Thus, in an effort to minimize the concentration of stress, the curved line 132 is preferably formed in a shape having a gentle slope.

For example, in the curved line 132, as shown in FIGS. 4 and 5, two or more arcs with a small curvature are arranged in a line, in which two neighboring arc connecting portions may be formed to make a gentle curve. Of course, when it is possible to design the end of the joint portion 130 to be inclined to the width direction of the gas tube panel 100 at a level more than a reference value, the curved line 132 is not limited to the shape shown in FIGS. 4 and 5, but may be replaced with various shapes, such as a wave pattern.

As the amplitude of the curved line 132 increases, an effect of reducing volumetric expansion in the width direction of the joint portion 130 is enhanced. However, when the amplitude of the curved line 132 is too large, the coupling force between two neighboring gas tubes is reduced, because the contact area between the two horizontal portions 110 becomes narrow. Therefore, it is preferable that the curved line 132 is arranged to be spaced by a predetermined distance apart from the longitudinal end of the horizontal portion 110. At this time, as the thickness of the joint portion 130 is increased, a contact area of the two gas tubes coupled each other is enlarged. It is preferable that a distance D1 from the longitudinal end of the horizontal portion 110 to the curved line 132 is set to 6 times or more of the thickness of the joint portion 130.

Meanwhile, the curved line 132 may be formed over the entire end of the joint portion 130. In this case, stress is concentrated at an acute angle portion at which the curved line 132 and the vertical portion 120 are connected together, and thus cracks may occur between the vertical portion 120 and the joint portion 130. Accordingly, it is preferable that the curved line 132 is formed only at a point in an end of joint portion 130 which is spaced apart from the horizontal portion 120 by a predetermined distance. When a distance D2 between the end of curved line 132 and the vertical portion 120 is set too small, the efficiency to prevent damage between the vertical portion 120 and the joint portion 130 is insignificant, thus it is preferable that the distance D2 between the end of curved line 132 and the vertical portion 120 is set to 2mm or more. Of course, when the distance between the end of the curved line 132 and the vertical portion 120 is set too large, the length of the curved line 132 is reduced and the volumetric expansion in the width direction of the joint portion 130 becomes large. It is thus necessary that the distance D2 between the end of the curved line 132 and the vertical portion 120 is properly set.

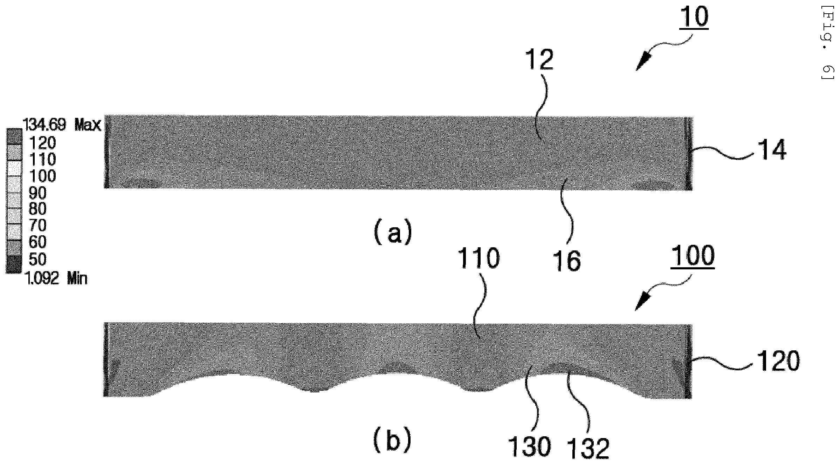

FIG. 6 shows a stress distribution pattern formed on the gas tube panel 100.

FIG. 6 is an analysis of a stress imputed to each portion when the conventional gas tube panel 10 shown in FIG. 1 and the gas tube panel 100 according to present invention shown in FIG. 4 thermally expand, and the magnitude of stress occurring at the joint portion 130 is indicated by color when the gas tube panel 100 is heated in a state in which the end of vertical portion 120 is fixed.

When thermal expansion is caused, the joint portion 16 is extended only in the width direction (in the left-right direction in FIG. 6) because the conventional gas tube panel 10 is formed such that the end of joint portion 16 is formed in a single line. Thus, large stress occurs at both ends of the width direction of the joint portion 16, as shown in (a) of FIG. 6.

However, in the gas tube panel 100 according to the present invention, the curved line 132 is formed at the end of joint portion 130, so during thermal expansion, the joint portion 130 is extended along the curved line 132. In other words, the joint portion is extended along the direction of intersection with the width direction, and as a result, stress is evenly generated in each of the joint portions 130 as shown in (b) of FIG. 6. As the stress is evenly distributed over the joint portion, stress does not concentrate on the connecting portion between the joint portion 130 and the vertical portion 120. As the result, the present invention removes the problem that the connecting portion between the joint portion 130 and vertical portion 120 may be broken, whereby it is possible to obtain an advantage of improved durability.

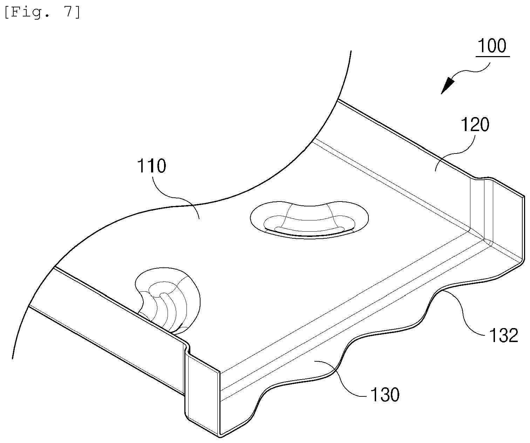

FIG. 7 is a partial perspective view of a second embodiment of the gas tube panel 100 constituting the gas tube for EGR cooler according to the present invention.

When the curved line 132 is configured to form a shape in which multiple arcs are arranged in a line as shown in FIGS. 4 and 5, a relatively high stress is generated at a point forming the arc shape, and a relatively low stress is generated at a point between the two arcs, as shown in (a) of FIG.6.

The gas tube panel 100 of the present invention may be formed such that the curved line 132 is configured in a sine wave shape, as shown in FIG. 7, in order that the stress generated in the joint portion 130 can be more evenly distributed. When the curved line 132 is formed in the sine wave shape as described above, the protruded portion and the depressed portion of the curved line 132 have the same curvature, and it is possible to obtain the effect that stresses of the same size are formed on the protruded portion and the depressed portion. In other words, the stress is uniformly distributed on the curved line 132.

While the present invention has been particularly described with reference to desirable embodiment, a scope of the present invention is not limited to the specific embodiments, but should be construed according to the appended claim. Also, as one skilled in the art it will be appreciate that many modifications and variations are possible without departing from the scope of the present invention.

## Claims

1. A gas tube for an EGR cooler, the gas tube comprising:
a pair of gas tube panels coupled in a laminated manner so as to provide an internal flow path, the gas tube panel including a horizontal portion extending horizontally along an exhaust gas flow direction, a vertical portion vertically erected from both ends in a width direction of the horizontal portion, and a joint portion extending stepwisely from a longitudinal end of the horizontal portion, wherein a curved line is provided at an end of the joint portion.

2. The gas tube of claim 1, wherein the curved line is configured such that at least two arcs are arranged in a line.

3. The gas tube of claim 1, wherein the curved line is configured in a shape of a sine wave.

4. The gas tube of claim 1, wherein the curved line is provided at a point in the end of the joint portion, the point being spaced by a predetermined distance apart from the vertical portion.

5. The gas tube of claim 4, wherein a distance between an end of the curved line and the vertical portion is set to 2mm or more

6. The gas tube of claim 1, wherein the curved line is spaced by a predetermined distance apart from the longitudinal end of the horizontal portion

7. The gas tube of claim 6, wherein the distance from the longitudinal end of horizontal portion to the curved line is set to 6 times or more a thickness of the joint portion.
